(19) **Europäisches Patentamt**
**European Patent Office**
**Office européen des brevets**

(11) **EP 4 468 643 A1**

(12) **EUROPEAN PATENT APPLICATION**

(43) Date of publication:
**27.11.2024 Bulletin 2024/48**

(21) Application number: **24177868.7**

(22) Date of filing: **24.05.2024**

(51) International Patent Classification (IPC):
*H04L 5/00* (2006.01)    *H04B 7/185* (2006.01)
*H04W 56/00* (2009.01)    *H04W 74/0833* (2024.01)

(52) Cooperative Patent Classification (CPC):
**H04L 5/0053; H04B 7/18513; H04W 56/0045;**
**H04W 56/009;** H04W 74/0833

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.05.2023   US 202363504478 P**
**21.05.2024   US 202418669622**

(71) Applicant: **Mavenir Systems, Inc.**
**Richardson, TX 75081 (US)**

(72) Inventors:
• **Khoshabi Nobar, Sina**
**Ottawa, Ontario, K2B 6M9K2B 6M9 Ottawa,**
**Ontario (CA)**
• **Wang, Neng**
**22473 Lund (SE)**

(74) Representative: **Studio Torta S.p.A.**
**Via Viotti, 9**
**10121 Torino (IT)**

(54) **METHODS FOR TIMING ADVANCE MANAGEMENT IN HARQ ACK DISABLED NB-IOT-NTN**

(57)     A system and a method are provided for optimizing application of timing advance command (TAC) mechanism in a Narrow Band Internet of Things (NB-IoT) non-terrestrial network (NTN) system utilizes a timing advance (TA) estimation restriction duration. After one operation of a timing advance (TA) estimation resulting in issuing of an initial TAC, the gNB ignores the results of new TA estimations until specified X seconds after the initial TAC is sent. TA estimation restriction duration refers to the time duration between the initial TA estimation and X seconds after the initial TAC. The value of X is specified such that X represents the minimum duration starting from the transmission of the first TAC in which any received NPUSCH within this duration is not based on a new TAC. By applying the TA estimation restriction duration, multiple corrections of the same TA error are prevented.

FIG. 4

EP 4 468 643 A1

## Description

BACKGROUND OF THE DISCLOSURE

1. Field of the Invention

The invention is directed to the field of Narrow Band Internet of Things (NB-IoT) non-terrestrial network (NTN), and relates more particularly to application of the existing NB-IoT specification for Terrestrial Networks (TNs) to support the NTN case.

2. Description of Related Art

Supporting User Equipment (UE) through satellite communications is one of the objectives of the 3rd Generation Partnership Project (3GPP) in 5th Generation (5G) wireless standard and beyond. A network with a satellite support is called a Non Terrestrial Network (NTN) in 3GPP terminology. In contrast to Terrestrial Networks (TNs), where UE directly communicates with the gNB, in NTN UE's/gNB's transmission is relayed by a Low/Medium/ Geostationary Earth Orbit (LEO/MEO/GEO) satellite. A UE can be an ordinary mobile device, a Machine Type Communication (MTC) device, or Narrow Band Internet of Things (NB-IoT) device.

Maintaining the uplink (UL) synchronization of User Equipment (UE) in NTN is more challenging than in TN. The difficulty arises from the long Round Trip Time (RTT) due to the distance of satellite and UEs/gNB on the earth surface. This long delay is beyond the capability of the conventional timing advance (TA) correction method in TN. In particular, the TA mechanism in TN is able to solve UL timing misalignment in the order of a few microseconds. However, the RTT in NTN causes timing misalignment in the order of hundreds of milliseconds. In response to this issue, the 3GPP has introduced a new mechanism, dubbed UE pre-compensation, to handle the TA problem in NTN. In this method, UE is provided with the satellite ephemeris data and feeder link delay estimation. Therefore, knowing its own location through Global Navigation Satellite System (GNSS) fix, UE is able to calculate the total delay in feeder link and service link, and hence, autonomously apply the proper TA. However, the conventional TA adjustment scheme, which operates based on TA estimation and TA command (TAC), is also in place for fine tuning the TA and compensating the TA error due to UE movement (in case GNSS fix is not updated yet) or any other source of error (e.g., circuit error, ephemeris data inaccuracy, etc.).

While TAC-based timing synchronization is a well-established method in TN, a new challenge emerges in the NTN case due to long RTT. Since this challenge is more prominent in Hybrid Automatic Repeat Request (HARQ) Acknowledgement (ACK) feedback-disabled case, we will explain the challenge in this context. Note that HARQ ACK feedback disabling is a new feature in 5G NTN to reduce the HARQ stalling impact. HARQ ACK feedback disabling in uplink means that gNB can schedule the UE for Narrowband Physical Uplink Shared Channel (NPUSCH) transmission using the same HARQ process ID used for previous NPUSCH transmissions while the reception of previous transmissions is still pending.

In the TAC-based synchronization solution, gNB estimates the timing error of UE based on the received NPUSCH transmission and issues a TAC through Medium Access Control (MAC) layer Control Element (CE). Upon reception of TAC, UE adjusts its TA in the first uplink slot after 12 downlink (DL) subframes since the reception of TAC. In the TN case, the delay between TAC transmission by gNB and TAC reception by UE is negligible. Hence, there is no further delay, on top of specification-defined 12 DL subframes, to apply TAC. Then, the next NPUSCH transmission will be based on the indicated TAC. On the other hand, in NTN, UE will receive TAC half of RTT seconds later than its transmission by gNB. In addition, it takes half of RTT for gNB to receive the first NPUSCH transmission based on the new TAC. Overall, gNB will receive the NPUSCH adjusted by new TAC, RTT+12 milliseconds after issuing TAC. The problem occurs when gNB receives multiple NPUSCH transmissions back-to-back. In this situation, gNB issues a TAC based on the first NPUSCH. Then, the next NPUSCH transmission which was transmitted before TAC is received by UE arrives at gNB. This new transmission has the same TA error as the previous one. At this moment, gNB detects this TA error for the second time and issues another TAC. Therefore, the same TA error is fixed multiple times (depending on the number of NPUSCH transmissions received). This disrupts the operation of the TAC-based synchronization solution.

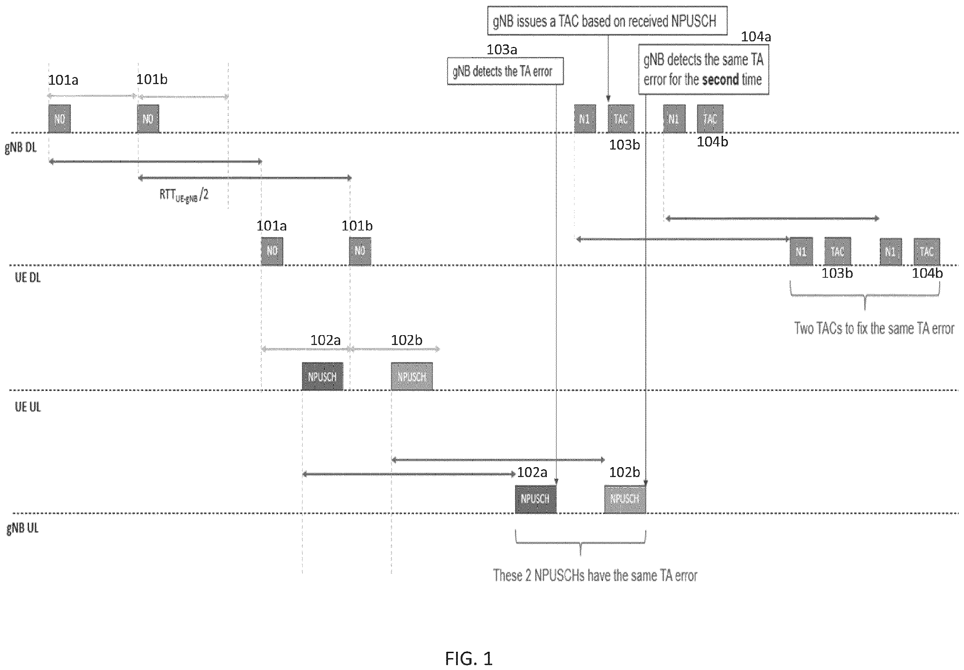

FIG. 1 shows an example scenario of the above-explained problem, i.e., TAC mechanism disruption in HARQ ACK-disabled IoT NTN. The gNB schedules the UE for two NPUSCH transmissions using two separate Downlink Control Information (DCI) format N0 (101a and 101b). Upon reception of the first DCI N0 101a, UE will start the transmission of NPUSCH 102a according to the scheduling rules. Let's assume this NPUSCH 102a transmission has a timing error. When gNB receives this NPUSCH 102a, it estimates the TA error (as shown by the box 103a) and issues a TAC 103b through DCI format N1 scheduling and adding TAC MAC CE to the subsequent NPDSCH transmission. Meanwhile, the second NPUSCH 102b with the same timing error arrives at the gNB (as shown by the box 104a), which triggers another TAC transmission (as shown by 104b). At this point, there are two TACs 103b and 104b aiming to correct a single TA error.

In Summary, in NB-IoT NTN there is a large gap between TA error estimation moment at gNB and the TA adjustment moment at UE. Therefore, it is possible that gNB receives multiple NPUSCH transmissions from UE with the same TA error before NPUSCH with the corrected TA lands at gNB. In this situation, gNB will send multiple TAC to correct the same TA error. This will disrupt the normal operation of TA solution.

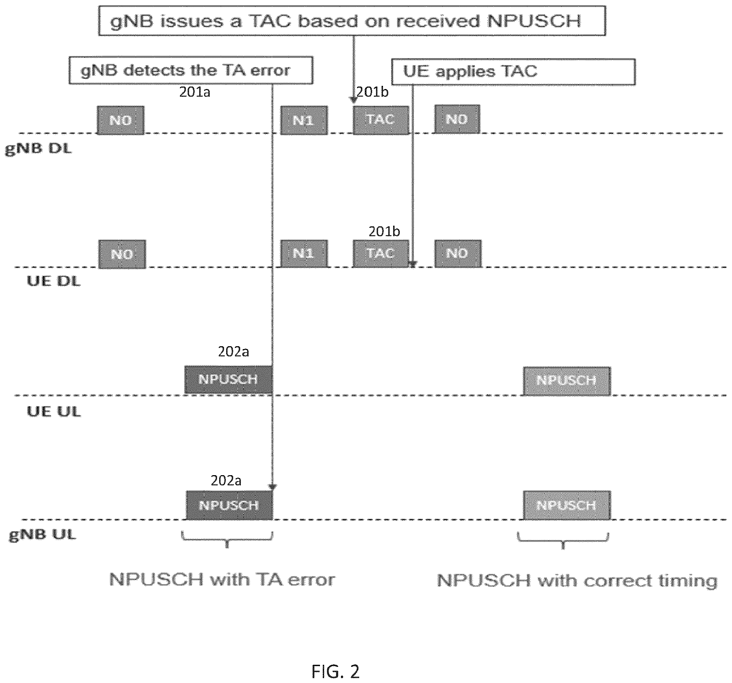

FIG. 2 is an illustration of TAC-based timing solution in NB-IoT TN case. In TN, due to limited distance between the gNB and the UE, the propagation delay is negligible and does not span multiple subframes. Therefore, the UE-transmitted NPUSCH 202a is received by the gNB almost instantly. UE also receives the issued TAC without any noticeable propagation delay. As shown in FIG. 2, it is clear that upon reception of the first NPUSCH 202a with TA error (as shown by box 201a), the gNB can issue a TAC command 201b. Due to almost-zero propagation delay, no further NPUSCH will be received by the gNB before the TA error has been fixed by TAC 201b at the UE side. Therefore, the above-explained problem of TAC mechanism disruption is an NTN-specific issue.

Accordingly, there is a need for a system and a method to effectively solve the above-mentioned issue of TAC mechanism disruption in an NTN.

SUMMARY

Accordingly, it is desired to provide a system and method in the field of Narrow Band Internet of Things (NB-IoT) non-terrestrial network (NTN), which system and method solve the problem of disruption in conventional TAC-based timing solution which is applied to NTN case with long RTT and disabled HARQ ACK feedback.

An example method according to the present disclosure adds "TA estimation restriction duration" to the conventional TAC-based solution to prevent gNB from multiple corrections of the same timing error. The example method according to the present disclosure has no impact on existing technical specifications because the example method focuses on how the gNB implements the timing advance solution.

According to an example embodiment, after one operation of TA estimation resulting in issuing TAC, the gNB ignores the results of new TA estimations until specified X seconds after the corresponding TAC for the initial TA estimation is sent, the value of X being determined (specified) in such a way that any UL transmission received by the gNB after this duration is based on the issued TAC.

According to an example embodiment, the value of $X$ is specified to be equal to or greater than the sum of $RTT_{UE-gNB}$ plus 12 milliseconds, $RTT_{UE-gNB}$ denoting the round trip time (RTT) between the UE and the gNB.

According to an example embodiment, any subsequent NPUSCH received during the specified TA estimation restriction duration does not trigger an additional TAC.

According to an example embodiment, the gNB calculates a differential TA between the received NPUSCH transmissions during TA estimation restriction duration, then the amount of the difference between the last TA estimation and the current TA estimation is considered as the new value of TA to issue a new TAC.

BRIEF DESCRIPTION OF THE DRAWINGS

FIG. 1 shows TAC mechanism disruption in HARQ ACK-disabled IoT NTN.
FIG. 2 shows TAC-based timing solution in NB-IoT TN case.
FIG. 3 illustrates an example embodiment in which TA estimation restriction duration is introduced.
FIG. 4 illustrates an example operation of TA mechanism based on TA estimation restriction duration.
FIG. 5 illustrates an example embodiment in which TA estimation result during TA estimation restriction duration is used to react faster to timing variations.

DETAILED DESCRIPTION

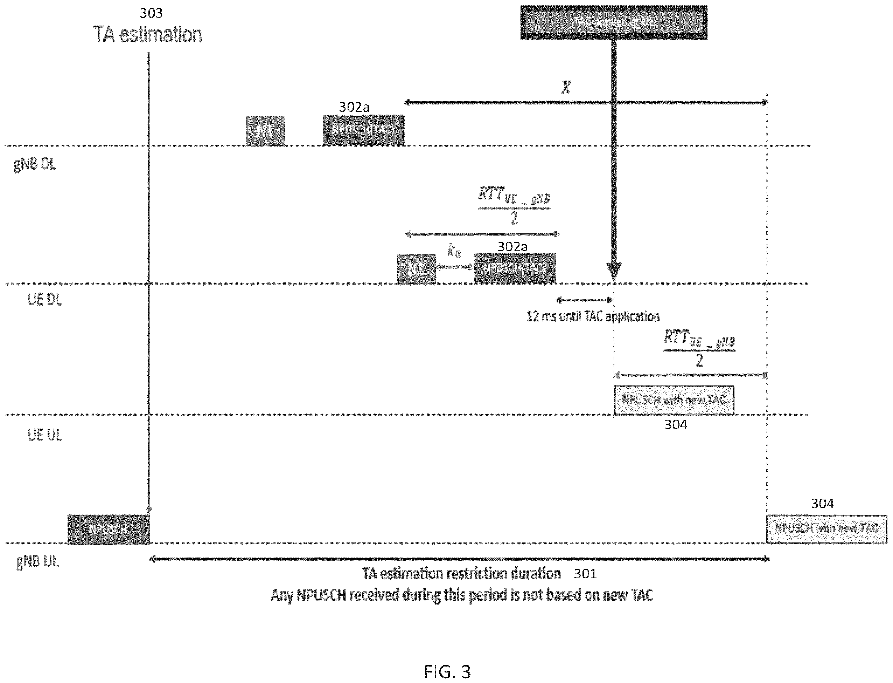

To prevent multiple corrections of the same TA error at gNB side, the present disclosure proposes to use a "TA estimation restriction duration" (an example of which is shown as 301 in FIG. 3), which is explained in detail below. According to an example embodiment of the present disclosure, after one operation of TA estimation resulting in issuing TAC (as shown by 302a in FIG. 3), the gNB ignores the results of new TA estimations until specified X seconds after the corresponding TAC 302a for the initial TA estimation is sent. The value of X is determined (specified) in such a way that any UL transmission received by gNB after this duration is based on the issued TAC 302a. In other words, X is the minimum duration starting from TAC 302a transmission, in which any received NPUSCH within this duration is not based on the new TAC. Hence, new TA estimation after this duration will be based on the applied TA at UE side and multiple corrections of the same TA error will not occur. "TA estimation restriction duration" (301a in FIG. 3) refers to the time duration between the initial TA estimation 303 in FIG. 3 and X seconds after TAC 302a in FIG. 3.

An example implementation of the above-described mode of operation is illustrated in the signal/timing diagram of FIG. 3. In FIG. 3, the box "NPUSCH with new TAC" 304 is a hypothetical NPUSCH transmission which is considered to calculate the value of X. As can be seen from **Errore. L'origine riferimento non è stata trovata.,** the value of X should be equal to or greater than $RTT_{UE-gNB}$ + 12 milliseconds ($RTT_{UE-gNB}$ denoting the RTT between UE and gNB). This guarantees that the received NPUSCH after duration X is based on a new TAC. In addition, as shown in FIG. 3, any NPUSCH received during the TA estimation restriction duration 301 is not based on the new TAC. In case the gNB has no access to the exact value of $RTT_{UE-gNB}$, the value of cell-specific $k_{offset}$ can be used to obtain the worst-case value of $X$, which corresponds to the largest possible value for this parameter. In this case, X is equal to $k_{offset}$ + $k_{mac}$ + 12. Note that cell specific $k_{offset}$ reflects the maximum possible RTT in UE-to-reference point link, and $k_{mac}$ is the RTT between the reference point (e.g., gateway) and the gNB. Both of these values ($k_{offset}$ and $k_{mac}$) are known to gNB.

In the following section, an example scenario using typical values for GEO satellite case is provided to illustrate how applying the TA estimation restriction duration can avoid multiple corrections of the same TA error. The first step is to calculate how many NPUSCH transmissions can be scheduled by gNB before the first scheduled NPUSCH arrives at gNB. During one cycle of DCI N0 transmission and NPUSCH reception, multiple DCI N0 can be transmitted to the same UE to schedule further NPUSCH transmissions. This is supported when HARQ ACK feedback is disabled. Hence, the gNB can use the same HARQ process ID to schedule new NPUSCH transmission before the reception of the first NPUSCH. After this calculation, it will be clear how much TA error can be introduced by multiple TA correction, which error can be avoided by applying the TA estimation restriction duration.

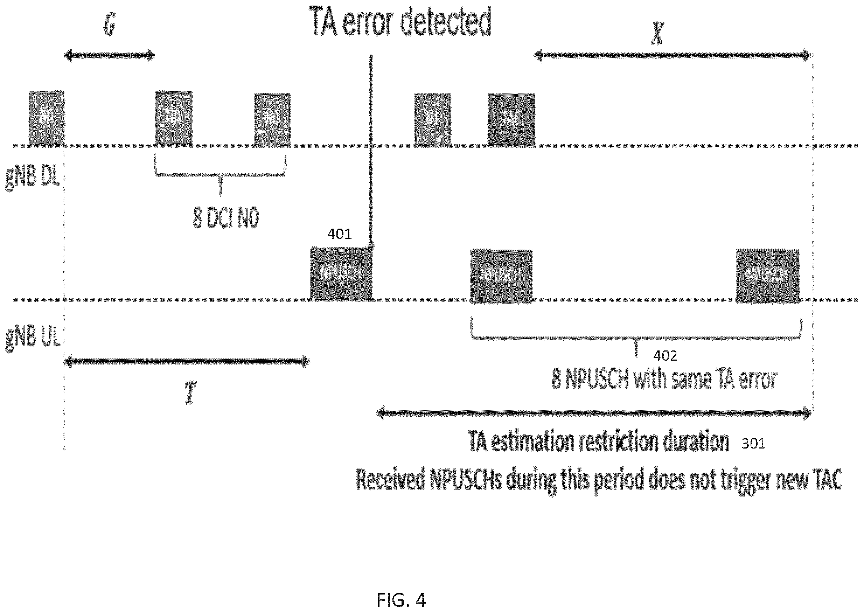

As an example (which will be explained in connection with FIG. 4), based on UL scheduling rules of the 3GPP specification TS36.213, we can show that one cycle of UL scheduling (from the last subframe of DCI N0 transmission until the first subframe of NPUSCH reception) takes $T = k_{offset} + k_{mac} + k_0$ milliseconds ($k_0$ is the scheduling delay parameter defined in the specification TS36.213). In addition, it is straightforward to calculate the number of DCI N0 that can be sent during this period. The gap between two consecutive DCI N0, $G$, should be greater than a threshold value $G_{thld}$, i.e., $G \geq G_{thld}$, $G_{thld} = k_{offset} + k_{mac} + k_0 + L_{NPUSCH} + 3 - N_{TA}$, in order to guarantee UE half-duplexity constraint along with NPDCCH monitoring restriction constraint defined in the specification TS36.213. In $G_{thld}$ expression, $L_{NPUSCH}$ is the length of NPUSCH transmission, and $N_{TA}$ is the overall TA value applied at the UE side. When gNB has no access to the value of UE specific $N_{TA}$, its lower bound should be considered. For the sake of simplicity of this illustration, let's assume $N_{TA} = k_{offset}$. This assumption leads to $G = k_{mac} + k_0 + L_{NPUSCH} + 3$. Considering 1 subframe for DCI N0 transmission (no repetition), the number of DCIs during one UL cycle (T) is $\left\lfloor \frac{T}{G} \right\rfloor$. Typical values for $k_{offset}$ in GEO satellite case is 550 milliseconds. Assuming $k_{mac} = 5$, $L_{NPUSCH} = 48$ (corresponds to $I_{RU} = 5$, single tone UE with 8 milliseconds resource unit size), and $k_0 = 8$, the number of DCIs during one UL cycle is

$$\left\lfloor \frac{T}{G} \right\rfloor = 8$$

, as shown in FIG. 4. This means that after reception of the first NPUSCH transmission, the next 8 NPUSCH transmissions will also be based on the same TA value. Hence, if the first NPUSCH transmission has a particular TA error (e.g., NPUSCH 401 in FIG. 4), the same TA error will be observed in the subsequent 8 NPUSCH transmissions (if scheduled), as referenced by 402 in FIG. 4. However, the presence of TA estimation restriction duration 301, as illustrated in **Errore. L'origine riferimento non è stata trovata.,** prevents gNB from issuing new TAC based on these NPUSCHs. FIG. 4 illustrates that NPUSCHs received during the TA estimation restriction duration 301 does not trigger a new TAC.

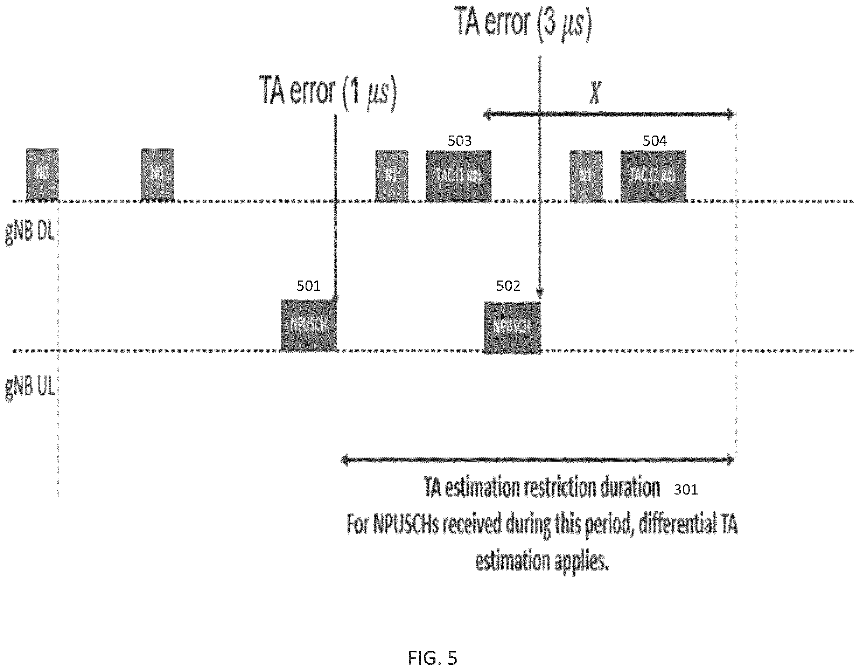

In one example embodiment of the method illustrated in FIG. 5, the gNB calculates the differential TA between the received NPUSCH transmissions 501 and 502 during TA estimation restriction duration 301. Then, the amount of the difference between the last TA estimation and the current TA estimation is considered as the new value of TA for issuing a new TAC. This differs from the above-described example embodiment of the method illustrated in FIG. 4, in which the result of TA estimation during TA estimation restriction duration is ignored.

In the operation of TA mechanism illustrated in FIG. 5, let's assume that the first NPUSCH 501 has a timing error of 1 microsecond and the second NPUSCH 502 has timing error of 3 microseconds. The gNB issues a timing advance command (TAC) 503 corresponding to the first NPUSCH 501 to correct the 1 microsecond error. When the second NPUSCH 502 is received, since it arrives during the TA estimation restriction duration 301, the gNB will calculate the difference between the new timing error (3 microseconds) of the NPUSCH 502 and the previous timing error (1 microsecond) of the NPUSCH 501, and the gNB issues a timing advance command (TAC) 504 corresponding to the difference between these two values (2 microseconds). This enables the gNB to react faster to the timing errors, specifically in scenarios with fast variations in timing error (such as fast UE movement, or inaccurate ephemeris data used for autonomous TA calculation).

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims. For example, although the example embodiments used NB-IoT NTN to illustrate the application of TA estimation restriction duration, the method according to the present disclosure is applicable to any system based on similar timing advance mechanism and whenever the RTT is long. As another example, with appropriate modifications, the method according to the present disclosure can be applied to New Radio (NR) NTN. In addition, although examples based on NB-IoT NTN in GEO satellite scenario were presented, the present disclosure is equally applicable to MEO and LEO satellite cases as well.

## Claims

1. A method for optimizing application of timing advance command (TAC) mechanism in a Narrow Band Internet of Things (NB-IoT) non-terrestrial network (NTN) system, the method comprising the steps of:

   receiving a first Downlink Control Information (DCI) N0 at a user equipment (UE);
   transmitting, by the UE to a next generation node B (gNB), a first Narrowband Physical Uplink Shared Channel (NPUSCH) transmission in response to the first DCI N0;
   estimating, by the gNB, a first timing advance (TA) error associated with the received first NPUSCH transmission;
   transmitting, by the gNB, a first TA command (TAC) to the UE to correct the first TA error associated with the received first NPUSCH transmission; and
   applying, by the gNB, a specified TA estimation restriction duration following the receipt of the first NPUSCH;
   wherein one of:

   a) any subsequent NPUSCH received during the specified TA estimation restriction duration does not trigger an additional TAC; or
   b) for a subsequent NPUSCH received during the specified TA estimation restriction duration,

   i) estimating, by the gNB, a second timing advance (TA) error associated with the received subsequent NPUSCH transmission;
   ii) calculating, by the gNB, a differential TA error between the first TA error and the second TA error; and
   iii) transmitting, by the gNB, a second TA command (TAC) to the UE to correct the differential TA error.

2. The method according to claim 1, wherein the TA estimation restriction duration is the time duration between the estimating of the first TA error and specified $X$ seconds after the first TAC.

3. The method according to claim 2, wherein the value of $X$ is specified to be equal to or greater than the sum of $RTT_{UE\text{-}gNB}$ plus 12 milliseconds, $RTT_{UE\text{-}gNB}$

denoting the round trip time (RTT) between the UE and the gNB.

4. The method according to claim 2, wherein any subsequent NPUSCH received during the specified TA estimation restriction duration does not trigger an additional TAC.

5. The method according to claim 3, wherein any subsequent NPUSCH received during the specified TA estimation restriction duration does not trigger an additional TAC.

6. The method according to claim 2, wherein the gNB ignores results of any new TA error estimations associated with any subsequent NPUSCH until the specified X seconds have elapsed after the first TAC has been transmitted.

7. The method according to claim 3, wherein the gNB ignores results of any new TA error estimations associated with any subsequent NPUSCH until the specified X seconds have elapsed after the first TAC has been transmitted.

8. The method according to claim 2, wherein the value of X is specified to ensure any UL transmission received by the gNB after the specified TA estimation restriction duration is based on the first TAC.

9. The method according to claim 3, wherein the value of X is specified to ensure any UL transmission received by the gNB after the specified TA estimation restriction duration is based on the first TAC.

10. The method according to claim 1, wherein any subsequent NPUSCH received during the specified TA estimation restriction duration does not trigger an additional TAC.

11. The method according to claim 10, wherein the gNB ignores results of any new TA error estimations associated with any subsequent NPUSCH until specified X seconds have elapsed after the first TAC has been transmitted.

12. The method according to claim 1, wherein for the subsequent NPUSCH received during the specified TA estimation restriction duration,

   i) estimating, by the gNB, the second timing advance (TA) error associated with the received subsequent NPUSCH transmission;
   ii) calculating, by the gNB, the differential TA error between the first TA error and the second TA error; and
   iii) transmitting, by the gNB, the second TA command (TAC) to the UE to correct the differential TA error.

**13.** The method according to claim 12, wherein the TA estimation restriction duration is the time duration between the estimating of the first TA error and specified X seconds after the first TAC.

**14.** The method according to claim 13, wherein the value of X is specified to ensure any UL transmission received by the gNB after the specified TA estimation restriction duration is based on the first TAC.

**15.** The method according to claim 13, wherein the value of $X$ is specified to be equal to or greater than the sum of $RTT_{UE\text{-}gNB}$ plus 12milliseconds, $RTT_{UE\text{-}gNB}$ denoting the round trip time (RTT) between the UE and the gNB.

FIG. 1

EP 4 468 643 A1

gNB issues a TAC based on received NPUSCH

gNB detects the TA error

UE applies TAC

201a

201b

N0

N1

TAC

N0

**gNB DL**

201b

N0

N1

TAC

N0

**UE DL**

202a

NPUSCH

NPUSCH

**UE UL**

202a

NPUSCH

NPUSCH

**gNB UL**

NPUSCH with TA error

NPUSCH with correct timing

FIG. 2

FIG. 3

FIG. 4

EP 4 468 643 A1

TA error (3 μs)

TA error (1 μs)

X

503

504

N0   N0

N1   TAC (1 μs)

N1   TAC (2 μs)

gNB DL

501

502

NPUSCH

NPUSCH

gNB UL

TA estimation restriction duration   301

For NPUSCHs received during this period, differential TA estimation applies.

FIG. 5

Europäisches
Patentamt

European
Patent Office

Office européen
des brevets

# EUROPEAN SEARCH REPORT

**Application Number**

EP 24 17 7868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/152181 A1 (FG INNOVATION CO LTD [CN]) 21 July 2022 (2022-07-21)<br>* paragraph [0162] - paragraph [0172] *<br>* paragraph [0271] - paragraph [0275] *<br>* paragraph [0325] - paragraph [0331] *<br>----- | 1-15 | INV.<br>H04L5/00<br>H04B7/185<br>H04W56/00<br><br>ADD.<br>H04W74/0833 |
| A | WO 2022/141433 A1 (LENOVO BEIJING LTD [CN]) 7 July 2022 (2022-07-07)<br>* paragraph [0021] - paragraph [0025] *<br>* paragraph [0078] - paragraph [0085] *<br>* paragraph [0104] - paragraph [0111] *<br>* figures 3-13 *<br>----- | 1-15 | |
| A | US 2022/232504 A1 (COZZO CARMELA [US] ET AL) 21 July 2022 (2022-07-21)<br>* paragraph [0071] *<br>* paragraph [0108] - paragraph [0110] *<br>* paragraph [0122] *<br>* paragraph [0134] - paragraph [0136] *<br>* figures 10-13 *<br>----- | 1-15 | |

**TECHNICAL FIELDS
SEARCHED       (IPC)**

H04L
H04B
H04W

The present search report has been drawn up for all claims

| Place of search | Date of completion of the search | Examiner |
|---|---|---|
| The Hague | 4 October 2024 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7868

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | | Publication date | Patent family member(s) | | Publication date |
|---|---|---|---|---|---|
| WO 2022152181 | A1 | 21-07-2022 | US | 2022232503 A1 | 21-07-2022 |
| | | | WO | 2022152181 A1 | 21-07-2022 |
| WO 2022141433 | A1 | 07-07-2022 | AU | 2020484214 A1 | 25-05-2023 |
| | | | CA | 3194717 A1 | 07-07-2022 |
| | | | CN | 116601911 A | 15-08-2023 |
| | | | EP | 4272364 A1 | 08-11-2023 |
| | | | US | 2024064677 A1 | 22-02-2024 |
| | | | WO | 2022141433 A1 | 07-07-2022 |
| US 2022232504 | A1 | 21-07-2022 | CN | 116746233 A | 12-09-2023 |
| | | | EP | 4265012 A1 | 25-10-2023 |
| | | | KR | 20230132478 A | 15-09-2023 |
| | | | US | 2022232504 A1 | 21-07-2022 |
| | | | WO | 2022158837 A1 | 28-07-2022 |

EPO FORM P0459

For more details about this annex : see Official Journal of the European Patent Office, No. 12/82